# FASCICULE DE BREVET EUROPEEN

(11) **EP 3 186 486 B1**
(45) Date de publication et mention de la délivrance du brevet: **19.06.2019**
(21) Numéro de dépôt: 15757539.0
(22) Date de dépôt: 18.08.2015
(51) Int. Cl.: F04D 29/54, F01D 5/28, F01D 9/02, F01D 9/04

(54) **AUBE DE REDRESSEUR EN MATÉRIAU COMPOSITE À BRIDES DE FIXATION DÉCALÉES POUR MOTEUR À TURBINE À GAZ**
LEITSCHAUFEL AUS VERBUNDMATERIAL MIT VERSETZTEN ANBRINGUNGSFLANSCHEN FÜR EINEN GASTURBINENMOTOR
GUIDE VANE MADE FROM COMPOSITE MATERIAL, COMPRISING STAGGERED ATTACHMENT FLANGES FOR A GAS TURBINE ENGINE

(30) Priorité: 26.08.2014 US 201462042056 P
(43) Date de publication de la demande: 05.07.2017
(73) Titulaire: SAFRAN AIRCRAFT ENGINES, 75015 Paris (FR)
(72) Inventeur: GIMAT, Matthieu, F-77550 Moissy-Cramayel Cedex (FR); CHARLEUX, François, F-33000 Bordeaux (FR); MARIN, Sébastien, Portsmouth, NH 03801 (US); MARION, Gwenael, F-77550 Moissy-Cramayel Cedex (FR)
(74) Mandataire: Desormiere, Pierre-Louis
(86) Numéro de dépôt international: PCT/FR2015/052219
(87) Numéro de publication internationale: WO 2016/030608

(56) Documents cités:
- WO-A1-2013/079859
- WO-A1-2013/079860
- WO-A1-2014/037675
- US-A1- 2003 185 673
- US-A1- 2013 108 422

## Description

### Arrière-plan de l'invention

La présente invention se rapporte au domaine général des aubes de redresseur pour moteur aéronautique à turbine à gaz.

Des exemples d'application de l'invention sont notamment les aubes directrices de sortie (appelées OGV pour « Outlet Guide Vane »), les aubes directrices d'entrée (appelées IGV pour « Inlet Guide Vane »), et les aubes à calage variable (appelées VSV pour « Variable Stator Vane ») d'une turbomachine aéronautique.

Typiquement, les aubes de redresseur d'un moteur aéronautique à turbine à gaz présentent chacune un aubage aérodynamique qui est fixé à chaque extrémité radiale à une virole par l'intermédiaire de brides de fixation. Ces aubes de redresseur forment des rangées d'aubes fixes qui permettent de guider le flux gazeux traversant le moteur selon une vitesse et un angle appropriés.

Les aubes de redresseur sont généralement métalliques mais il est devenu courant de les réaliser en matériau composite notamment pour en diminuer la masse. En particulier, il est connu de réaliser les aubes de redresseur à partir d'un renfort fibreux obtenu par tissage tridimensionnel dans lequel l'aubage et les brides de fixation forment une seule et même pièce. A cet effet, les brides de fixation sont typiquement formées par des déliaisons de la préforme principale (constituant la préforme d'aubage) en deux parties distinctes, l'une des parties étant constitutive de préforme de bride de fixation intrados (c'est-à-dire pliée vers la face intrados de l'aubage) et l'autre partie étant constitutive de préforme de bride de fixation extrados (c'est-à-dire pliée vers la face extrados de l'aubage).

Un tel procédé de fabrication présente un certain nombre d'inconvénients. Notamment, ce procédé entraîne de fortes contraintes de tissage puisqu'il est nécessaire de disposer d'un minimum de couches de torons pour permettre la création des parties déliées. De plus, la gestion des évolutions d'épaisseur de la préforme fibreuse est délicate à gérer. En effet, l'introduction de deux parties déliées implique que 2 fois moins de couches de torons sont disponibles dans ces zones déliées pour créer une dégressivité d'épaisseur, ce qui engendre des marches plus fortes aux sorties des couches ou nécessite le recours à des artifices de tissage (tel que le dédoublement de torons) pour adoucir ces variations d'épaisseur. Enfin, ce procédé de fabrication nécessite l'utilisation de bouche-trous tissés spécialement pour venir se loger dans l'ouverture de la déliaison et combler ainsi le vide et réduire les contraintes en fond de déliaison.

On connaît également le document WO 2013/079859 qui décrit une aube de redresseur en matériau composite.

### Objet et résumé de l'invention

La présente invention a donc pour objet principal une aube de redresseur qui ne présente les inconvénients précités.

Conformément à l'invention, ce but est atteint grâce à une aube de redresseur en matériau composite pour moteur à turbine à gaz comprenant un renfort fibreux densifié par une matrice, le renfort fibreux étant formé en une seule pièce par tissage tridimensionnel avec un aubage et au moins deux brides de fixation s'étendant depuis une extrémité radiale de l'aube vers des faces latérales opposées de l'aubage, lesdites brides de fixation étant décalées axialement l'une de l'autre.

L'aube de redresseur selon l'invention est remarquable en ce qu'elle présente des brides de fixation qui sont décalées axialement les unes des autres. Avec une telle architecture, il n'est pas nécessaire de réaliser des déliaisons de la préforme fibreuse pour obtenir ces brides de fixation. Il est ainsi possible de s'affranchir des inconvénients inhérents aux procédés de fabrication recourant à l'utilisation de déliaisons pour la formation des brides de fixation. De plus, une telle aube de redresseur nécessite, pour sa fabrication, une quantité inférieure de couches de torons par rapport aux procédés de fabrication précédemment décrits, ce qui représente un gain important en termes de masse et de coût de fabrication. Enfin, ce procédé de fabrication ne nécessite aucun tissage de bouche-trous.

L'aube de redresseur peut comprendre deux paires de brides de fixation s'étendant depuis une extrémité radiale externe de l'aube et décalées axialement l'une de l'autre.

L'aube de redresseur peut également comprendre deux brides de fixation s'étendant depuis une extrémité radiale interne de l'aube du côté d'un bord d'attaque de l'aubage. Dans ce cas, l'aube de redresseur peut comprendre en outre deux autres brides de fixation s'étendant depuis l'extrémité radiale interne de l'aube du côté d'un bord de fuite de l'aubage et étant alignées axialement l'une par rapport à l'autre.

L'aube de redresseur peut aussi comprendre, au niveau de chaque extrémité radiale, une bride de fixation située du côté d'un bord d'attaque de l'aubage et s'étendant vers une face latérale de l'aubage, et une bride de fixation située du côté d'un bord de fuite de l'aubage et s'étendant vers une face latérale opposée de l'aubage.

L'invention a également pour objet un procédé de fabrication d'une aube de redresseur telle que définie précédemment, le procédé comprenant successivement : l'élaboration par tissage tridimensionnel en une seule pièce d'une préforme fibreuse constituant la préforme de l'aubage et des brides de fixation, la découpe de la préforme fibreuse pour lui conférer le contour des parties constitutives d'aubage et de brides de fixation, la mise en forme de la préforme découpée en pliant les parties constitutives de brides de fixation, la conformation de la préforme dans un moule, et la densification de la préforme par une résine.

L'invention a encore pour objet une turbomachine comprenant au moins une aube de redresseur telle que définie précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1 et 2 sont des vues schématiques d'une aube de redresseur conforme à l'invention ;
- la figure 3 est une vue à plat d'une préforme fibreuse utilisée pour la fabrication de l'aube de redresseur des figures 1 et 2 ; et
- la figure 4 est une vue schématique d'une aube de redresseur.

### Description détaillée de l'invention

L'invention s'applique à la réalisation d'aubes de redresseur pour moteur aéronautique à turbine à gaz.

Des exemples non limitatifs de telles aubes de redresseur sont notamment les aubes directrices de sortie (OGV), les aubes directrices d'entrée (IGV), et les aubes à calage variable (VSV), etc.

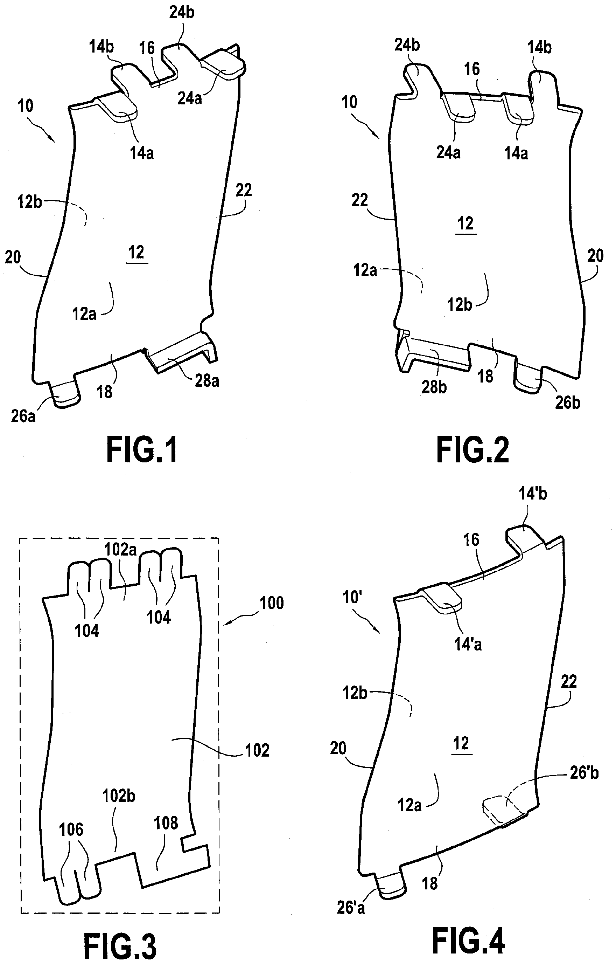

Les figures 1 et 2 représentent de façon schématique et en perspective un exemple d'une telle aube de redresseur 10 conforme à l'invention.

Conformément à l'invention, cette aube de redresseur 10 est réalisé en matériau composite avec un renfort fibreux densifié par une matrice, le renfort fibreux étant formé en une seule et même pièce par tissage tridimensionnel avec un aubage aérodynamique 12 et au moins deux brides (ou pattes) de fixation 14a, 14b destinées à permettre une fixation de l'aube de redresseur sur une virole (externe et/ou interne).

L'aubage 12 s'étend, d'une part radialement entre une extrémité radiale externe 16 et une extrémité radiale interne 18, et d'autre part axialement entre un bord d'attaque 20 et un bord de fuite 22.

De façon plus précise, les brides de fixation 14a, 14b s'étendent depuis l'une des extrémités radiales de l'aube 16, 18 vers des faces latérales opposées de l'aubage (à savoir la face intrados 12a et la face extrados 12b de l'aubage 12).

Ainsi, sur l'exemple des figures 1 et 2, la bride de fixation 14a (appelée bride intrados) s'étend du côté de la face intrados 12a de l'aubage, tandis que la bride de fixation 14b (appelée bride extrados) s'étend du côté de la face extrados 12b de l'aubage.

Par ailleurs, ces brides de fixation 14a, 14b sont décalées axialement l'une de l'autre, c'est-à-dire qu'elles ne sont pas alignées l'une avec l'autre dans le sens axial (sens de l'aubage entre son bord d'attaque 20 et son bord de fuite 22).

Par ailleurs, dans le mode de réalisation des figures 1 et 2, l'aube de redresseur 10 comprend, au niveau de l'extrémité radiale externe 16 de l'aubage, deux paires de brides de fixation 14a, 14b et 24a, 24b qui sont décalées axialement l'une de l'autre et pour chacune desquelles les brides de fixation sont également décalées axialement l'une de l'autre. Ces brides de fixations 14a, 14b et 24a, 24b sont destinées à permettre une fixation de l'aube de redresseur sur une virole externe.

De même, au niveau de son extrémité radiale interne 18, l'aube de redresseur 10 comprend encore deux autres brides de fixation 26a, 26b qui s'étendent vers les faces intrados 12a et extrados 12b de l'aubage. Ces brides de fixation 26a, 26b, qui sont situées du côté du bord d'attaque 20 de l'aubage, sont destinées à permettre une fixation de l'aube de redresseur sur une virole interne.

Au niveau de cette extrémité radiale interne 18, l'aube de redresseur 10 comprend également, dans le mode de réalisation des figures 1 et 2, deux brides de fixation axiales 28a, 28b qui sont situées du côté du bord de fuite 22 de l'aubage et qui sont alignées axialement l'une par rapport à l'autre (contrairement aux brides de fixations 26a, 26b). Ces brides de fixation axiales 28a, 28b permettent également de fixer l'aube de redresseur sur la virole interne.

On décrira maintenant un exemple de procédé de fabrication d'une telle aube de redresseur.

Une première étape du procédé de fabrication consiste à élaborer par tissage tridimensionnel (3D) en une seule pièce une préforme fibreuse constituant la préforme de l'aubage et des brides de fixation associées à celles-ci (à savoir ici les brides de fixations 14a, 14b, 24a, 24b, 26a, 26b et 28a, 28b). Le contour d'une telle préforme fibreuse est représenté en traits pointillés sur la figure 3.

Par tissage 3D, l'on comprendra que les fils de chaîne suivent des trajets sinueux afin de lier entre eux des fils de trame appartenant à des couches de fils de trame différentes, étant noté qu'un tissage 3D, notamment à armure interlock, peut inclure des tissages 2D en surface. Différentes armures de tissage 3D peuvent être utilisées, telles que des armures interlock, multi-satin ou multi-toile, par exemple, comme décrit notamment dans le document WO 2006/136755.

L'étape suivante du procédé consiste à découper la préforme fibreuse pour lui conférer le contour des parties constitutives d'aubage et de brides de fixation. Cette découpe est par exemple réalisée au jet d'eau et le résultat obtenu est représenté par la préforme découpée 100 illustrée en trait plein sur la figure 3.

La préforme découpée 100 comprend ainsi une partie constitutive de préforme d'aubage 102, quatre parties 104 constitutives de préformes de brides de fixation au niveau d'une extrémité radiale externe 102a de la partie constitutive de préforme d'aubage 102, et, au niveau de l'extrémité radiale interne 102b de celle-ci, deux parties 106 constitutives de préformes de brides de fixation et une partie 108 constitutive de préforme de brides de fixation axiales.

La préforme découpée est ensuite mise en forme, notamment par pliage des parties 104 et 106 constitutives de brides de fixation. Ces parties sont ainsi pliées alternativement vers l'intrados et l'extrados de la partie constitutive de préforme d'aubage 102. Quant à la partie 108 constitutive de préforme de brides de fixation axiales, elle a préalablement subi une déliaison au moment du tissage de la préforme fibreuse pour permettre sa mise en forme par pliage des deux portions déliées vers l'intrados et l'extrados de la partie constitutive de préforme d'aubage 102.

La préforme fibreuse ainsi obtenue est ensuite séchée et mise en place dans un moule d'injection. Le dépôt de la matrice dans la préforme fibreuse pour former une aube de redresseur en matériau composite telle que celle illustrée sur les figures 1 et 2 est réalisée en maintenant la préforme dans un moule au moins jusqu'à rigidification (ou consolidation) de la préforme.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou par un processus de type RTM ("Resin Transfer Moulding"). Dans le cas d'une matrice en carbone ou en céramique, la densification pourra être réalisée par infiltration chimique en phase gazeuse, ou CVI ("Chemical Vapor Infiltration") ou par imprégnation par une composition liquide contenant une résine précurseur de carbone ou de céramique et traitement thermique de pyrolyse ou céramisation du précurseur, ces procédés étant bien connus en soi.

La figure 4 représente une variante de réalisation d'une aube de redresseur 10'.

Cette aube de redresseur 10' se distingue de celle précédemment décrite en ce qu'elle ne comprend, au niveau de son extrémité radiale externe 16, que deux brides de fixation 14'a, 14'b décalées axialement l'une de l'autre, à savoir : une bride de fixation 14'a qui est située du côté du bord d'attaque 20 de l'aubage et qui s'étend vers la face intrados 12a de l'aubage, et une bride de fixation 14'b qui est située du côté du bord de fuite 22 de l'aubage et qui s'étend vers la face extrados 12b de l'aubage.

L'aube de redresseur 10' comprend également, au niveau de son extrémité radiale interne 18, deux brides de fixation 26'a, 26'b qui sont décalées axialement l'une de l'autre, à savoir : une bride de fixation 26'a qui est située du côté du bord d'attaque 20 de l'aubage et qui s'étend vers la face intrados 12a de l'aubage, et une bride de fixation 26'b qui est située du côté du bord de fuite 22 de l'aubage et qui s'étend vers la face extrados 12b de l'aubage.

On notera enfin que cette aube de redresseur 10' est dépourvue de brides de fixation qui sont alignées axialement l'une par rapport à l'autre.

## Revendications

1. Aube de redresseur (10) en matériau composite pour moteur à turbine à gaz comprenant un renfort fibreux densifié par une matrice, le renfort fibreux étant formé en une seule pièce par tissage tridimensionnel avec un aubage (12) et au moins deux brides de fixation (14a, 14b, 24a, 24b) s'étendant depuis une extrémité radiale externe (16) de l'aube vers des faces latérales (12a, 12b) opposées de l'aubage, lesdites brides de fixation étant décalées axialement l'une de l'autre, **caractérisée en ce que** l'aube de redresseur comprend en outre deux brides de fixation (26a, 26b) s'étendant depuis une extrémité radiale interne (18) de l'aube du côté d'un bord d'attaque (20) de l'aubage et vers les faces latérales (12a, 12b) opposées de l'aubage, lesdites brides de fixation étant décalées axialement l'une de l'autre.

2. Aube de redresseur selon la revendication 1, comprenant deux paires de brides de fixation (14a, 14b, 24a, 24b) s'étendant depuis une extrémité radiale externe (16) de l'aube et décalées axialement l'une de l'autre.

3. Aube de redresseur selon la revendication 1, comprenant en outre deux autres brides de fixation (28a, 28b) s'étendant depuis l'extrémité radiale interne de l'aube du côté d'un bord de fuite (22) et étant alignées axialement l'une par rapport à l'autre.

4. Aube de redresseur selon la revendication 1, comprenant, au niveau de chaque extrémité radiale (16, 18), une bride de fixation située du côté d'un bord d'attaque (20) de l'aubage (12) et s'étendant vers une face latérale (12a) de l'aubage, et une bride de fixation située du côté d'un bord de fuite (22) de l'aubage et s'étendant vers une face latérale opposée (12b) de l'aubage.

5. Turbomachine comprenant au moins une aube de redresseur (10) selon l'une quelconque des revendications 1 à 4.

6. Procédé de fabrication d'une aube de redresseur (10) selon l'une quelconque des revendications 1 à 5, comprenant successivement :
l'élaboration par tissage tridimensionnel en une seule pièce d'une préforme fibreuse (100) constituant la préforme de l'aubage et des brides de fixation ;
la découpe de la préforme fibreuse pour lui conférer le contour des parties (102, 104, 106) constitutives d'aubage et de brides de fixation ;
la mise en forme de la préforme découpée en pliant les parties constitutives de brides de fixation ;
la conformation de la préforme dans un moule ; et
la densification de la préforme par une résine.

## Patentansprüche

1. Leitschaufel (10) aus Verbundwerkstoff für ein Gasturbinentriebwerk, mit einer durch eine Matrix verdichteten Faserverstärkung, wobei die Faserverstärkung durch dreidimensionales Weben mit einem Blatt (12) und wenigstens zwei Befestigungsflanschen (14a, 14b, 24a, 24b), die sich von einem äußeren radialen Ende (16) der Schaufel zu gegenüberliegenden Seitenflächen (12a, 12b) des Blattes erstrecken, einstückig ausgebildet ist, wobei die Befestigungsflansche axial zueinander versetzt sind, **dadurch gekennzeichnet, dass** die Leitschaufel ferner zwei Befestigungsflansche (26a, 26b) aufweist, die sich von einem inneren radialen Ende (18) der Schaufel auf der Seite einer Vorderkante (20) des Blattes und zu den gegenüberliegenden Seitenflächen (12a, 12b) des Blattes erstrecken, wobei die Befestigungsflansche axial zueinander versetzt sind.

2. Leitschaufel nach Anspruch 1, umfassend zwei Paare von Befestigungsflanschen (14a, 14b, 24a, 24b), die sich von einem äußeren radialen Ende (16) der Schaufel aus erstrecken und axial zueinander versetzt sind.

3. Leitschaufel nach Anspruch 1, ferner umfassend zwei weitere Befestigungsflansche (28a, 28b), die sich von dem inneren radialen Ende der Schaufel auf der Seite einer Hinterkante (22) aus erstrecken und axial zueinander ausgerichtet sind.

4. Leitschaufel nach Anspruch 1, die im Bereich eines jeden radialen Endes (16, 18) einen Befestigungsflansch, welcher auf der Seite einer Vorderkante (20) des Blattes (12) angeordnet ist und sich zu einer Seitenfläche (12a) des Blattes erstreckt, sowie einen Befestigungsflansch umfasst, welcher auf der Seite einer Hinterkante (22) des Blattes angeordnet ist und sich zu einer gegenüberliegenden Seitenfläche (12b) des Blattes erstreckt.

5. Turbomaschine, die wenigstens eine Leitschaufel (10) nach einem der Ansprüche 1 bis 4 umfasst.

6. Verfahren zur Herstellung einer Leitschaufel (10) nach einem der Ansprüche 1 bis 5, das nacheinander umfasst:
das Herstellen eines Faservorformlings (100), welcher den Vorformling des Blattes und der Befestigungsflansche bildet, durch dreidimensionales Weben aus einem Stück,
das Zuschneiden des Faservorformlings, um ihm die Kontur der Teile (102, 104, 106), welche das Blatt und die Befestigungsflansche bilden, zu verleihen,
das Informbringen des zugeschnittenen Vorformlings durch Falten der die Befestigungsflansche bildenden Teile,
die Formung des Vorformlings in einer Form und
das Verdichten des Vorformlings durch ein Harz.

## Claims

1. A composite material guide vane (10) for a gas turbine engine, the composite material comprising fiber reinforcement densified by a matrix, the fiber reinforcement being formed as a single piece by three-dimensional weaving and comprising an airfoil (12) and at least two fastener flanges (14a, 14b, 24a, 24b) extending from a radial end (16) of the vane towards opposite side faces (12a, 12b) of the airfoil, said fastener flanges being axially offset from each other, **characterized in that** the guide vane further includes two fastener flanges (26a, 26b) extending from a radially inner end (18) of the vane beside a leading edge (20) of the airfoil and towards opposite side faces (12a, 12b) of the airfoil, said fastener flanges being axially offset from each other.

2. A guide vane according to claim 1, including two pairs of fastener flanges (14a, 14b, 24a, 24b) extending from a radially outer end (16) of the airfoil and axially offset from each other.

3. A guide vane according to claim 1, further including two other fastener flanges (28a, 28b) extending from the radially inner end of the vane beside a trailing edge (22) and axially level with each other.

4. A guide vane according to claim 1, including, at each radial end (16, 18), a fastener flange situated beside a leading edge (20) of the airfoil (12) and extending towards one side face (12a) of the airfoil, and a fastener flange situated beside a trailing edge (22) of the airfoil and extending towards an opposite side face (12b) of the airfoil.

5. A turbine engine including at least one guide vane (10) according to any one of claims 1 to 4.

6. A method of fabricating a guide vane (10) according to any one of claims 1 to 5, the method comprising in succession:
• using three-dimensional weaving to prepare a fiber preform (100) in a single piece constituting the preform of the airfoil and of the fastener flanges;
• cutting out the fiber preform to give it the outline of the portions (102, 104, 106) constituting the airfoil and fastener flanges;
• shaping the cut-out preform by folding the portions constituting fastener flanges;
• shaping the preform in a mold; and
• densifying the preform with a resin.
